# FASCICULE DE BREVET EUROPEEN

(11) **EP 0 448 434 B1**
(45) Date de publication et mention de la délivrance du brevet: **26.10.1994**
(21) Numéro de dépôt: 91400569.9
(22) Date de dépôt: 01.03.1991
(51) Int. Cl.: H02M 1/08, H02M 1/10, H02M 1/145, H02M 7/145

(54) **Redresseur susceptible de fonctionner avec au moins deux plages distinctes de tension alternative d'alimentation**
Gleichrichter für mindestens zwei Versorgungswechselspannungsbereiche
Rectifier for at least two AC-voltage supply ranges

(30) Priorité: 05.03.1990 FR 9002749
(43) Date de publication de la demande: 25.09.1991
(73) Titulaire: SGS-THOMSON MICROELECTRONICS S.A., 94253 Gentilly Cédex (FR)
(72) Inventeur: Castagnet, Thierry, F-37000 Tours (FR); Bielli, Jean-Claude, F-38400 Saint Martin d'Hères (FR)
(74) Mandataire: de Beaumont, Michel

(56) Documents cités:
- EP-A- 0 129 133
- EP-A- 0 284 412
- FR-A- 2 556 522
- US-A- 4 665 323

## Description

La présente invention concerne un redresseur susceptible de fonctionner avec au moins deux plages distinctes de tension alternative d'alimentation.

Plus précisément, la présente invention vise un redresseur susceptible de s'adapter de façon automatique à la plage de tension comprenant la tension à laquelle il est alimenté. Ce type de redresseur est en général particulièrement utile lorsque l'on souhaite alimenter un appareil en courant continu à partir d'une alimentation alternative susceptible de correspondre soit aux standards américains (110 Volts, 60 Hz), soit aux standards français (220 Volts, 50 Hz), la tension étant susceptible de pouvoir varier de façon importante autour des tensions de référence de 110 et 220 Volts. Toutefois, d'autres applications sont envisageables.

Le schéma de principe d'un tel redresseur, connu dans l'art antérieur (FR-A- 2 556 522), est illustré aux figures 1 et 2.

Le redresseur 10 qui y est représenté comporte un pont de diodes D1-D4, dont une entrée (bornes 11 et 12) est raccordée à une source de tension alternative d'alimentation (non représentée), et deux capacités C1 et C2 d'alimentation montées en série et raccordées en parallèle sur une sortie du pont de diodes (bornes 13, 14). Les capacités C1 et C2 sont généralement dimensionnées en fonction de la puissance d'alimentation à raison de 2 µF/Watt. Ainsi, pour un redresseur susceptible de délivrer une puissance de 200 W, les capacités C1 et C2 ont pour valeur 400 µF. Ainsi, lorsque le redresseur est destiné à fonctionner avec des plages de tension d'alimentation respectivement centrées sur 110 V et 220 V, avec une fréquence de l'ordre de 50 ou 60 Hz, l'ondulation de la tension aux bornes des capacités C1 et C2 est inférieure à 50 V.

Un interrupteur commandé S est raccordé entre l'une des bornes d'entrée (ici la borne 12) et un point de raccord 15, agencé en série entre les capacités C1 et C2. A cet interrupteur est associé un détecteur 17 de plage de tension d'alimentation et un moyen de commande 16 de l'interrupteur agissant notamment en réponse au détecteur 17 et adapté à commander la fermeture de l'interrupteur S lorsque la tension d'alimentation est comprise dans l'une, prédéterminée, desdites plages d'alimentation. En pratique, l'interrupteur S est un triac.

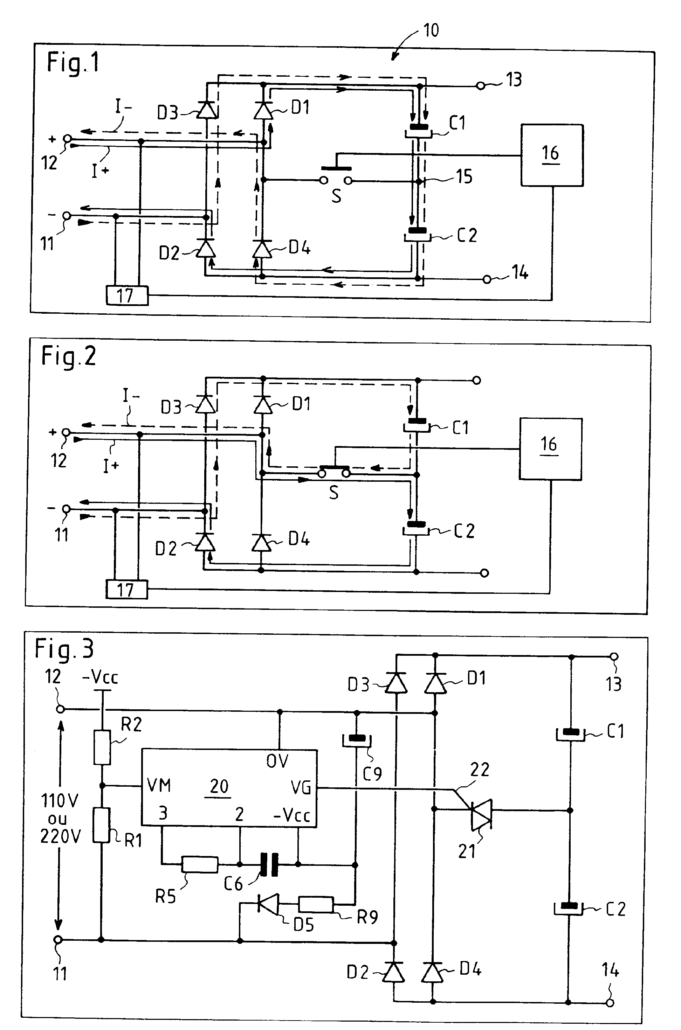

Le fonctionnement du circuit représenté en figures 1 et 2 est tout à fait classique et va maintenant être rappelé.

Ainsi, dans le circuit de l'art antérieur illustré en figures 1 et 2, lorsque le circuit détecteur 17 détecte une tension d'alimentation appartenant à la seconde plage, par exemple celle centrée sur 220 V, un signal est envoyé au circuit de commande 16, de telle sorte que l'interrupteur est maintenu ouvert ; lorsque le détecteur 17 détecte une tension d'alimentation comprise dans la première plage d'alimentation, celle centrée sur 110 V, un signal est envoyé au circuit de commande 16 de telle sorte que l'interrupteur S est fermé.

Dans le premier cas, le courant circule comme illustré en figure 1. Sur cette figure, sous la référence I₊, le courant circulant lors de l'alternance positive a été illustré en traits fins. On observe que, pendant cette alternance, les diodes D1 et D2 sont passantes alors que les diodes D3 et D4 sont bloquées et que le courant I₊ charge les deux capacités C1 et C2. Sous la référence I₋, on a illustré en traits fins interrompus le courant circulant lors de l'alternance négative. On observe que les diodes D3 et D4 sont passantes tandis que les diodes D1 et D2 sont bloquées. Le courant charge également les capacités C1 et C2. Les courants I₊ et I₋, circulent dans le même sens dans le circuit constitué par les capacités C1 et C2 montées en série.

Lorsque le détecteur 17 détecte une tension comprise dans la plage centrée sur 110 V, l'interrupteur S est fermé, figure 2. On observe alors que le courant I₊ ne charge que la capacité C2, la diode D1 étant bloquée car du fait de la fermeture de l'interrupteur S, il lui est appliqué la tension de C1 qui la polarise en sens inverse, Lors de l'alternance négative, le courant I₋, ne charge que la capacité C1 tandis que la diode D4 est bloquée, car il lui est appliqué la tension de C2 qui polarise en sens inverse du fait de la fermeture de l'interrupteur S.

Dans le circuit illustré à la figure 2, pour fermer l'interrupteur S, le circuit de commande 16 débite à un courant de commande qui, en pratique, est appliqué à la gâchette du triac constituant l'interrupteur S. Dans certaines applications, ce courant de commande est de l'ordre de 20 mA, le circuit de commande consommant de façon classique 4 W environ. Une telle consommation est considérée comme excessive.

Par ailleurs, les variations de la tension réseau sont souvent importantes. En effet, si l'on considère le cas d'un redresseur susceptible de fonctionner en mode 110 V et en mode 220 V, cela signifie qu'en pratique, en mode 110 V, le redresseur doit être capable de fonctionner dans une plage allant de 88 à 132 V, tandis qu'en mode 220 V, le redresseur doit fonctionner dans une plage allant de 176 à 276 V.

Par conséquent, les modules d'alimentation de ces circuits comprennent des résistances de forte dissipation (supérieure à 5 W). Or, ces composants sont très coûteux, ce qui, sur le plan économique, peut avoir pour incidence d'empêcher la commercialisation des redresseurs devant être ainsi conçus.

Il est donc souhaitable de pouvoir diminuer la consommation du circuit de commande de l'interrupteur commandé, de telle sorte que l'on réalise déjà à ce niveau une économie et qu'en plus on puisse utiliser, dans le circuit d'alimentation du circuit de commande, des résistances de'dissipation sensiblement plus faibles (par exemple de l'ordre de 2 W) pour pouvoir également réaliser une économie importante à ce niveau.

Aussi la présente invention vise-t-elle un redresseur susceptible de fonctionner avec au moins deux plages distinctes de tension alternative d'alimentation, comportant un pont de diodes dont une entrée est raccordée à une source de tension alternative d'alimentation, deux capacités d'alimentation montées en série et raccordées en parallèle sur une sortie du pont de diodes, un interrupteur commandé raccordé entre l'une des bornes d'entrée du pont de diodes et un point de raccord agencé en série entre les deux capacités, un détecteur de plage de tension d'alimentation et un moyen de commande de l'interrupteur agissant notamment en réponse au détecteur et adapté à commander la fermeture de l'interrupteur lorsque la tension d'alimentation est comprise dans l'une, prédéterminée, desdites plages d'alimentation, redresseur caractérisé en ce que le moyen de commande est en outre adapté à fermer l'interrupteur après un premier intervalle de temps après chaque passage à zéro de la tension d'alimentation et à l'ouvrir après un second intervalle de temps, l'échéance du second intervalle de temps correspondant sensiblement au moment où la valeur absolue de la tension doit passer par un maximum.

Avantageusement, dans un mode de réalisation préféré, l'interrupteur commandé est au moins en partie constitué par un triac tandis que le moyen de commande comporte des moyens raccordés à la gâchette du triac adaptés à rendre le triac conducteur, après le premier intervalle de temps après chaque passage à zéro de la tension d'alimentation et à bloquer le triac après le second intervalle de temps.

Grâce à cette disposition, on réalise l'économie d'énergie souhaitée. En effet, on observera, d'une manière générale, que ce n'est que pendant la période de fermeture de l'interrupteur commandé que le circuit de commande débite un courant. Toutes choses égales par ailleurs, les inventeurs ont pu constater une consommation de 2 W au lieu des 5 W, précédemment observés. Il s'ensuit que dans le circuit d'alimentation, des résistances de faible dissipation (2 W) ont pu être utilisées en lieu et place des résistances de forte dissipation utilisées dans l'art antérieur.

Les caractéristiques et avantages de la présente invention ressortiront d'ailleurs de la description qui va suivre, en référence aux dessins annexés sur lesquels :
- les figures 1 et 2 ont déjà été décrites ;
- la figure 3 est un schéma de principe du redresseur conforme à l'invention ;
- la figure 4 est un schéma de principe du circuit de commande et de détection du redresseur illustré en figure 3 ;
- la figure 5 est un premier diagramme des temps illustrant de façon schématique l'évolution de certains niveaux de tension pendant une période de la tension alternative d'alimentation du redresseur ;
- la figure 6 est un schéma de principe d'un mode de réalisation de l'oscillateur et du diviseur de fréquence illustrés en figure 4 ;
- la figure 7 est un deuxième diagramme des temps illustrant l'évolution de certains signaux ;
- la figure 8 est un schéma de principe d'un mode de réalisation du contrôleur de validation-dévalidation illustré en figure 4 ;
- la figure 9 est un troisième diagramme des temps il lustrant l'évolution de certains signaux, et
- les figures 10 et 11 sont des schémas de principe d'un mode de réalisation de divers circuits illustrés en figure 4.

Les éléments ou composants communs aux diverses figures conservent des références identiques.

En figure 3, on reconnait l'entrée 11, 12, le pont de diodes D1-D4, les deux capacités C1, C2 et la sortie du pont de diodes 13, 14. L'interrupteur commandé S est remplacé par un triac 21 dont une électrode de commande, ou gâchette 22, est reliée à une sortie VG d'un circuit de commande 20 conforme à l'invention. L'entrée 11 du redresseur est également raccordée à une première résistance R1 (1 MΩ) d'un pont de résistances, dont la borne commune est raccordée à une entrée VM du circuit de commande 20 et dont la deuxième résistance R2 (18 kΩ) est raccordée à une borne d'alimentation du circuit -Vcc.

Une borne 0V du circuit 20 est également raccordée à l'une, 12, des deux bornes d'entrée.

La borne OV est en outre raccordée à un circuit d'alimentation auxiliaire composé par une capacité d'alimentation C9 (100 µF) montée en série avec une résistance R9 (18 kΩ) de limitation, cette dernière étant montée en série avec une diode redresseuse D5 raccordée à l'autre borne, 11, d'entrée. La borne -Vcc est raccordée à la capacité C9 et à la résistance R9.

Le circuit 20 est également raccordé à un circuit RC composé d'une résistance R5 (82 kΩ) (montée entre les bornes 2 et 3) et d'une capacité C6 (1 µF) (montée entre la borne 2 et la borne -Vcc).

Conformément à une caractéristique importante de la présente invention, le circuit de commande 20 est adapté à fermer l'interrupteur (constitué en l'espèce par le triac 21) après un premier intervalle de temps après chaque passage à zéro de la tension d'alimentation et à ouvrir l'interrupteur constitué par le triac 21 après un second intervalle de temps, l'échéance du second intervalle de temps correspondant sensiblement au moment où la valeur absolue de la tension doit passer par une maximum.

Dans le mode de réalisation choisi et représenté, le circuit de commande 20 est adapté à générer sur sa sortie VG des impulsions de courant de commande nécessaires pour rendre le triac conducteur, après le premier intervalle de temps après le passage à zéro de la tension d'alimentation et interrompre la fourniture du courant de commande après le second intervalle de temps.

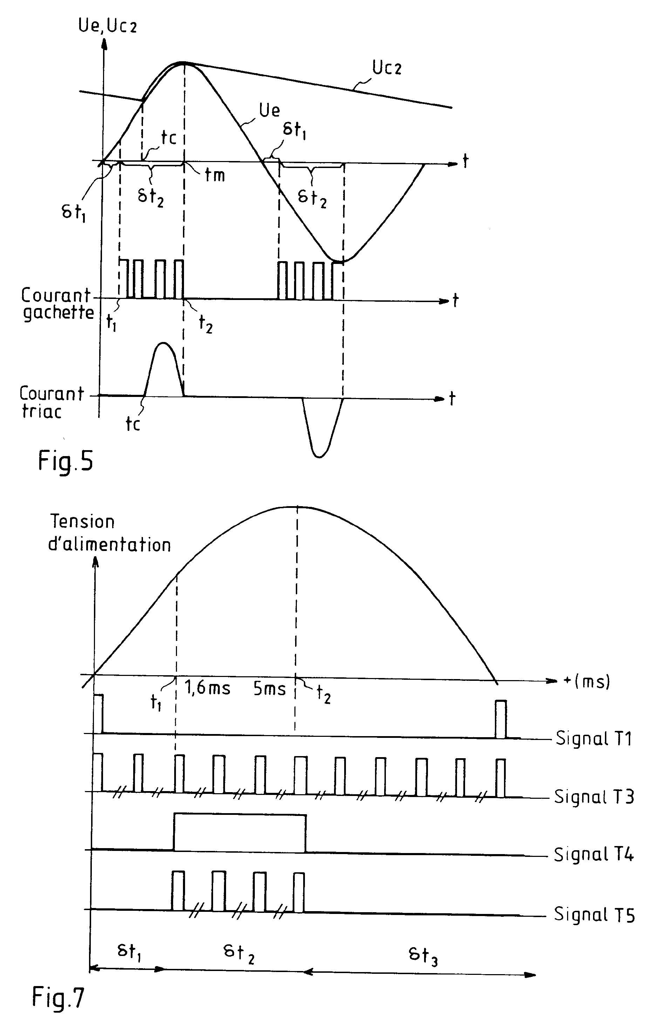

La finalité du circuit de commande 20 va être maintenant exposée à l'appui de la figure 5.

On sait que lorsque le redresseur est alimenté par une tension d'alimentation comprise dans une première des plages de tension d'alimentation (en l'espèce celle centrée sur 220 V), le triac est bloqué, c'est-à-dire que l'interrupteur constitué par le triac est ouvert.

En revanche, lorsque la tension d'alimentation est comprise dans la seconde plage de tension d'alimentation, en l'espèce celle centrée sur 110 V, le triac 21 est conducteur, c'est-à-dire que l'interrupteur constitué par ce triac est fermé pendant un intervalle de temps prédéterminé qui va maintenant être explicité.

En effet, si on considère une période de la tension d'alimentation :
- pendant l'alternance positive (courant I₊, figure 2), la fermeture de l'interrupteur commandé (ou la mise en conduction du triac) permet la charge de la capacité d'alimentation C2 qui se trouve alors connectée à la polarité négative ;
- pendant l'alternance négative (courant I₋), la fermeture de l'interrupteur commandé permet la charge de la capacité d'alimentation C1 qui se trouve alors connectée à la polarité positive.

L'inventeur a découvert que l'interrupteur commandé n'a besoin d'être fermé que lorsque la tension résiduelle aux bornes de chaque capacité est inférieure à la tension du réseau.

En effet, dans le mode de réalisation choisi et représenté, les capacités C1 et C2 ont pour valeur 400 µF, et, dans ces conditions, l'ondulation de la tension aux bornes de chaque capacité reste inférieure à 50 V.

Ainsi, le moment où la tension aux bornes de l'une ou l'autre des capacités vient à être inférieure à la tension du réseau et où, par conséquent, il est nécessaire que le triac 20 conduise est l'instant t_{c} porté en abscisse en figure 5.

Sur la partie haute de la figure 5, la courbe Uₑ représente la variation de la tension nominale d'alimentation de 110 V pendant une période. La courbe U_{C2} montre la variation de la tension aux bornes de la capacité C2. La capacité C2 ne se charge que pour autant que la tension à ses bornes soit inférieure à celle du réseau car, en effet, la tension aux bornes de la diode D2 est alors positive, ce qui la rend conductrice. Or, la chute de tension maximum aux bornes de C2 étant de l'ordre de 50 V, la capacité C2 ne commence à se charger qu'à partir de l'instant t_{c} où la courbe U_{C2} intercepte la courbe Uₑ.

Par ailleurs, la capacité C2 ne se charge qu'entre l'instant t_{c} et l'instant tₘ du passage de la tension U_{C2} par un maximum, c'est-à-dire à la fin du premier quadrant (90°), car, ensuite, la tension du réseau chute (entre 90° et 360°) et la capacité C2 se décharge (selon une pente telle que la tension à ses bornes ne chute pas de plus de 50 V).

Ainsi, s'agissant de la charge de la capacité C2, l'inventeur a observé que le triac n'a besoin d'être conducteur qu'entre les instants t_{c} et tₘ, la diode D2 étant, de son côté, conductrice entre ces instants.

Des observations identiques peuvent être faites s'agissant de la charge et de la décharge de la capacité C1 ainsi que de la conduction du triac, étant observé que la capacité C1 ne se charge que pendant l'alternance négative.

Il est toutefois rappelé que la courbe Uₑ illustrée en figure 5 est celle de la tension d'alimentation lorsque celle-ci a la valeur nominale de 110 V. En pratique, la tension du secteur peut chuter (on considère ici qu'elle peut atteindre une valeur plancher de 88 V) ou peut être supérieure à la valeur nominale (jusqu'à atteindre, dans cet exemple, la valeur plafond de 132 V). De même, la fréquence est susceptible de prendre la valeur de 50 ou 60 Hz.

La courbe U_{C2} viendra au plus tôt en intersection avec la courbe Uₑ (ce qui donne la valeur théorique minimale de t_{c}) lorsque la tension d'alimentation présente les caractéristiques 88 V, 60 Hz. Si l'on prend en compte une ondulation maximale de 50 V, la valeur minimale de t_{c} est de 1,7 ms après le passage à zéro de la tension alternative d'alimentation, dans le premier quadrant (compte tenu d'une marge de sécurité et des composants employés dans ce mode de réalisation, on prendra ici comme valeur minimale de t_{c} 1,6 ms -c'est la référence t₁ sur les divers diagrammes des temps-). On observera toutefois que l'abscisse t_{c} peut prendre d'autres valeurs minimales si l'on change les caractéristiques de la tension d'alimentation et des capacités.

L'instant tₘ est déterminé essentiellement par la fréquence de la tension d'alimentation et est d'autant plus éloigné de t_{c} que la fréquence est faible. En l'espèce pour 50 Hz, l'instant t₂ correspondant à la valeur maximale de tₘ se situe 5 ms après le passage à zéro de la tension d'alimentation dans le premier quadrant (soit 3,4 ms après le premier intervalle de temps de 1,6 ms).

Il est ainsi défini dans l'alternance positive un premier intervalle de temps δt₁ après le passage à zéro de l'alimentation, de 1,6 ms dans cet exemple, où la mise en conduction du triac doit être autorisée, et un second intervalle de temps δt₂, commençant en t₁, à l'échéance duquel, en t₂, le triac doit être bloqué (ici δt₂ = 3,4 ms). D'une manière générale, on observera que l'échéance de δt₁ est déterminée par la valeur théorique minimale que t_{c} peut prendre, compte tenu de l'ondulation de la tension aux bornes de la capacité C2, de la valeur minimale de la tension d'alimentation et de la valeur maximale de la fréquence de la tension d'alimentation, une marge de sécurité (ici 0,1 ms) pouvant être prise en compte. L'échéance du second intervalle de temps δt₂ est essentiellement déterminée par la valeur minimale de la fréquence de la tension d'alimentation et est fixée au moment où la valeur de la tension passe par un maximum (90° ou 270°), une marge de sécurité pouvant être prévue.

Un raisonnement semblable donne des valeurs des intervalles de temps δt1 et δt2 pour la capacité C1 identiques à ceux déterminés ci-dessus pour C2 mais localisés dans le troisième quadrant (entre 180 et 270°) et calculés à partir du passage par zéro de la tension d'alimentation à la fin du second quadrant. Mais là encore, ces valeurs dépendent des caractéristiques de la tension d'alimentation et des capacités.

Sur la figure 5, on a également illustré l'évolution du courant dans l'électrode 22 de commande du triac 21 en fonction du temps ainsi que le courant traversant ce dernier. On observe que le circuit de commande 20 est adapté à envoyer des impulsions de courant pendant l'intervalle de temps δt2, tandis que le courant ne circule dans le triac dans un sens puis dans l'autre seulement que pendant l'intervalle de temps au cours duquel la capacité C1 ou C2 se charge.

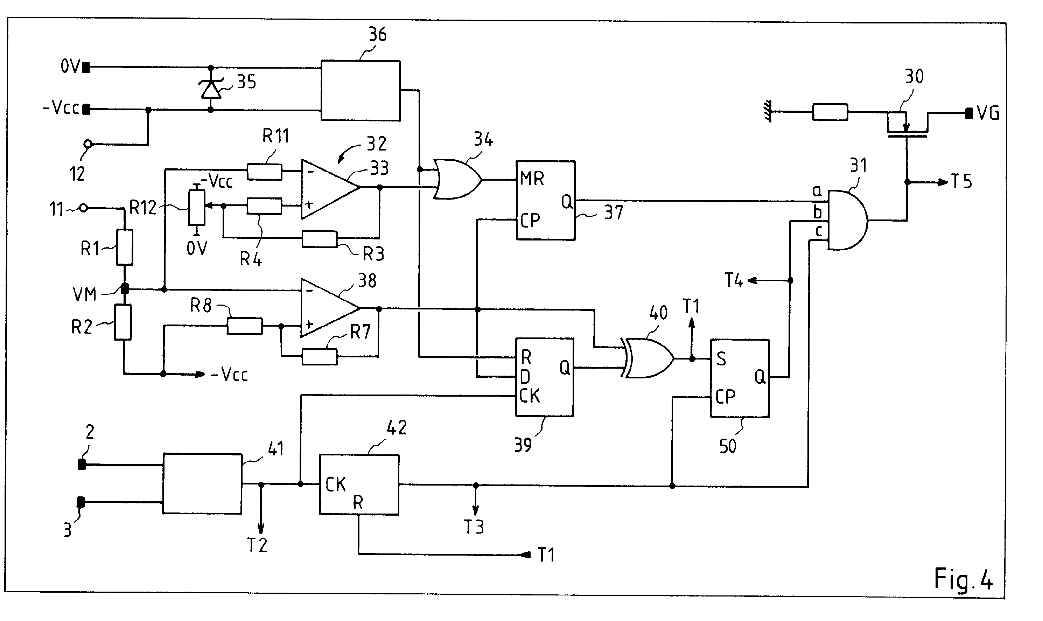

On va maintenant décrire à l'appui des figures 4, 6 et 8, le schéma de principe du mode de réalisation préféré du circuit de commande 20.

Sur ces figures, les différents composants ont été illustrés conformément à leur représentation habituelle notamment sur le catalogue SGS-THOMSON MICROELECTRONICS 1988-1989, référence SFST 1188, 1ère édition. Les diverses entrées-sorties des composants ont été également représentées conformément à la représentation habituelle. Ces composants appartiennent à la famille CMOS HCF 4000.

On reconnait sur la figure 4 les entrées O V, -Vcc, VM, 2, 3 ainsi que la sortie VG.

Le courant devant être envoyé dans la gâchette du triac 21 est généré dans ce mode de réalisation par un transistor 30 à effet de champ MOS-N dont le drain est raccordé à la sortie VG du circuit et dont la source est raccordée à une résistance elle-même raccordée à la masse. La grille du transistor 30 est raccordée à la sortie d'un étage de synthèse constitué par une porte ET 31, permettant de générer la synthèse des informations en provenance de divers circuits qui vont être décrits, la porte ET 31 envoyant une série d'impulsions (signal T5) à la grille du transistor 30 pour commander le déblocage du triac 21 lorsqu'un certain nombre de conditions sont réunies.

Le circuit de commande 20 comporte tout d'abord un étage de détection de niveau de tension comportant lui-même un détecteur 32 constitué essentiellement par un comparateur 33 raccordé à une porte OU 34 dont la sortie est raccordée à l'entrée MR d'un circuit contrôleur de mode. Le circuit contrôleur de mode réseau est constitué par une bascule 37 dont la sortie Q est raccordée sur l'une des entrées de la porte ET 31.

Le circuit de commande 20 comporte également un détecteur de passage à zéro de la tension d'alimentation constitué par un comparateur 38 et une bascule de type D 39 (HCF 4013B).

On rappelle qu'une bascule D est une bascule logique ayant un mode asynchrone (mise à zéro et remise à zéro : entrées S et R) et un mode synchrone dans lequel l'état de l'entrée D est recopié sur la sortie Q à chaque front montant sur l'entrée d'horloge CK.

Les comparateurs 33 et 38 sont associés à une résistance de contre-réaction R3 (220 kΩ) et à une résistance d'entrée négative R4 (10 kΩ) (respectivement R7 (220 kΩ) et R8 (10 kΩ)) qui réalisent un hystérésis dans le fonctionnement des comparateurs. Par ailleurs, une résistance R11 (10 kΩ) est raccordée à l'entrée négative du comparateur 33 et au point VM. Les résistances R4 et R11 R11 permettent d'équilibrer le courant de polarisation du comparateur 33. Le point VM est raccordé à l'entrée négative du comparateur 38.

La sortie Q de la bascule 39 est raccordée à une entrée d'une porte OU EXCLUSIF 40 dont la sortie délivre un signal T1 représentatif des passages à zéro de la tension d'alimentation.

En effet, les résistances R1 et R2 réalisent sur l'entrée du pont de diodes un montage potentiométrique qui lit la tension à une échelle réduite (facteur 0,018): le signal en VM constitue l'entrée différentielle des comparateurs 33 et 38.

Ainsi, en premier lieu, à chaque changement de signe de tension, la sortie du comparateur 38 change d'état :
- état logique 1 qui correspond à 0 V ;
- état logique 0 qui correspond à -9 V.

La bascule D 39 et la porte OU EXCLUSIF 40 ont pour fonction d'analyser chaque changement d'état de la bascule 38. Un signal T2 rectangulaire périodique (25 kHz), généré par un circuit oscillateur 41, décrit plus loin, est appliqué à l'entrée CK de la bascule D 39. Ainsi à chaque changement d'état de la sortie du comparateur 38, le signal en sortie de la porte 40 est la recopie du signal T2. Une impulsion rectangulaire se trouve donc générée à chaque passage par zéro de la tension d'alimentation : c'est le signal T1.

La figure 7, qui est un diagramme illustrant l'évolution de certains signaux en fonction du temps montre, dans sa partie supérieure une demi-alternance positive de la tension d'alimentation. Le signal T1 est une impulsion rectangulaire dont le front montant est concomittant au passage à zéro de la tension alternative d'alimentation.

En second lieu, le signal en VM permet la détection du changement de mode réseau (110 ou 220 V) grâce au détecteur 32. En effet, la résistance R4 accordée à l'entrée positive du comparateur 33 est raccordée au point milieu d'un potentiomètre R12 (3 kΩ) dont les extrémités sont connectées aux références de tension O V et -Vcc.

Compte tenu des valeurs R1 et R2 (respectivement 1 MΩ et 18 kΩ), la tension en VM reproduit, de façon réduite (facteur 0,018), la tension sur une demi-alternance (sur l'autre demi-alternance, la diode D5 court-circuite). Cette tension est appliquée à l'entrée négative du comparateur 33. Sur l'entrée positive du comparateur est appliquée une tension de seuil déterminée par le point milieu du potentiomètre R12 à partir de laquelle la sortie du comparateur 33 change de signe. Ce seuil est ici fixé à 3,75 V (correspondant à 150 V efficaces).

Ainsi, la sortie du comparateur 33 change d'état en fonction de la tension aux bornes d'entrée 11, 12 :
- état logique 1 qui correspond à la plage centrée sur 220 V,
- état logique 0 qui correspond à la plage centrée sur 110 V.

La sortie du comparateur 33 est appliquée à une entrée de la porte OU 34 et sa sortie est mise à un.

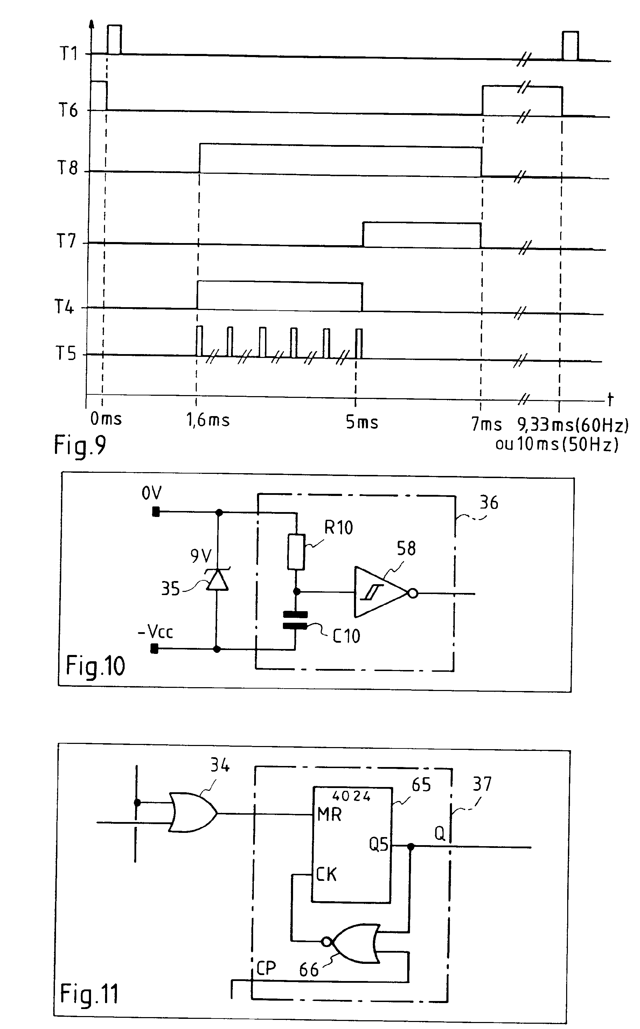

La bascule 37 se compose, dans ce mode de réalisation, d'un compteur sept étages 65 (composant HCF 4024) et d'une porte NON-OU 66 (figure 11). Une entrée de la porte NON-OU 66 est raccordée à la sortie Q5 du compteur sept étages 65, tandis que la sortie de la porte NON-OU est raccordée à l'entrée CK du compteur sept étages. La deuxième entrée de la porte NON-OU 66 est raccordée à l'entrée CP du circuit 37. L'entrée CP est raccordée à la sortie de la bascule 38.

Dans le cas où la tension 220 V est détectée, la sortie de la porte 34 est à un. Un "un" se trouve donc appliqué sur l'entrée de remise à zéro MR du compteur 65 et la sortie Q5 de ce dernier se trouve en conséquence forcée a zéro. Un zéro est alors présent sur l'entrée a de la porte ET 31, de telle sorte qu'un zéro apparait alors sur sa sortie.

Lorsque la tension de 110 V est détectée par le comparateur 33, la sortie de la porte 34 est à zéro, un zéro se trouvant alors appliqué sur l'entrée MR du compteur 65. Ce dernier va alors pouvoir compter grâce aux signaux appliqués sur son entrée d'horloge CK. En effet, la bascule 37 est raccordée, par son entrée CP, à la sortie du comparateur 38. Or la sortie du comparateur 38 change d'état à chaque changement de signe de la tension appliquée aux entrées 11, 12. Ainsi, la seconde entrée de la porte NON-OU 66 change d'état à chaque changement de signe de la tension. Ce signal est appliqué à l'entrée CK et comme le compteur 65 est un compteur sept étages, au bout de sept fronts de montée détectés par l'entrée CK, la sortie Q5 passe à un.

Il apparait donc que le circuit contrôleur de mode 37 fonctionne comme un élément de retard lors de la détection de la tension 110 V, ce retard correspondant à huit périodes du réseau. A la fin de ce retard, l'entrée a de la porte ET 31 est mise à un.

Le circuit de commande 20 comporte également un circuit de régulation de la tension d'alimentation, constitué ici par une diode ZENER régulatrice 35 (BZX 83 C9V1) montée en parallèle sur les entrées OV et -Vcc, de telle sorte que la borne -Vcc soit au potentiel de -9 V.

Au régulateur constitué par la diode 35 est associé un circuit de remise à zéro 36, destiné à générer une impulsion à la mise sous tension du redresseur.

Un schéma de principe du circuit 36 est illustré en figure 10. Le circuit 36 comporte tout d'abord un montage RC constitué par une résistance R10 (220 kΩ) et une capacité C10 (33 nF) agencés en série et montés en parallèle avec la diode régulatrice 35. Le point de raccord entre la résistance R10 et la capacité C10, est raccordé à l'entrée d'un amplificateur-inverseur 58 de type "Trigger de Schmitt" dont la sortie est raccordée à la seconde entrée de la porte OU 34. L'amplificateur-inverseur 58 est ici un composant HCF 40106 B.

La résistance R10 retarde la charge de la capacité C10 à la mise sous tension. A la mise sous tension du redresseur, la tension d'entrée de l'amplificateur 58 augmente doucement et reste en dessous du seuil de l'amplificateur 58, ce qui génère en sortie un état logique un appliqué d'une part à l'entrée de la porte OU 34 et, d'autre part, à l'entrée de remise à zéro R de la bascule D 39. Lorsque la tension de la capacité C10 est égale à la tension de seuil de l'amplificateur 59, sa sortie bascule au zéro logique, qui est alors appliqué à la porte OU 34 et à l'entrée R de la bascule 39.

Ainsi, lors de chaque mise sous tension, la mise à un logique des entrées de remise à zéro de la bascule 37 et de la bascule 39 permet une réinitialisation complète du circuit de commande du triac pendant un temps fixé d'une part par le seuil de l'amplificateur 59 (5,5 V) et d'autre part, par le circuit R10-C10 (7 ms).

Le circuit de commande 20 comporte également un oscillateur 41 raccordé d'une part à l'entrée CK de la bascule 39 et d'autre part à l'entrée CK d'un diviseur de fréquence 42 dont la sortie génère un signal T3.

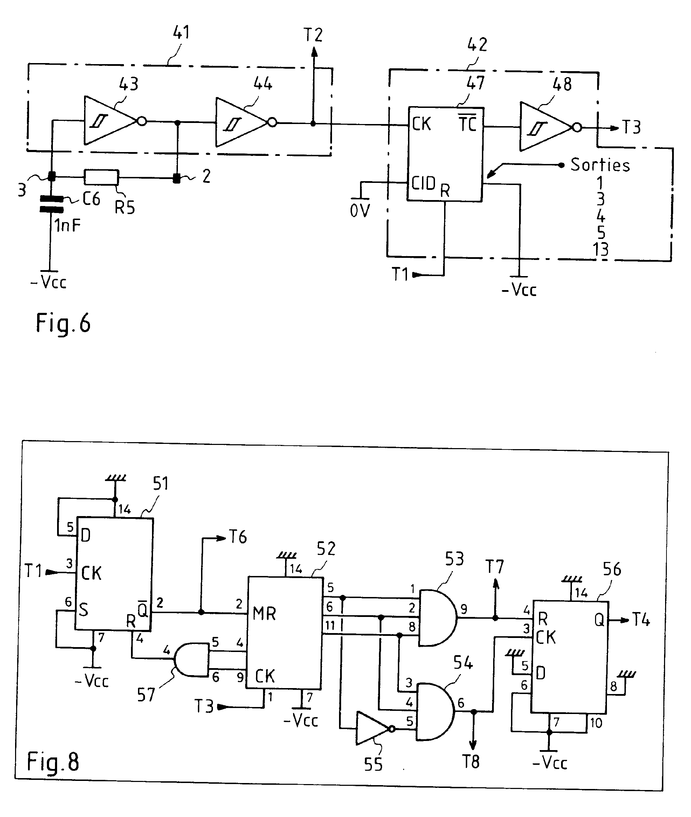

Le circuit 41, qui génère le signal T2, est constitué, dans ce mode de réalisation, par deux amplificateurs inverseurs 43, 44 de type "Trigger de Schmitt", figure 6 (composants HCF 40106B). La résistance R5 de 82 kΩ montée en contre-réaction sur l'entrée de l'amplificateur 43 à laquelle est raccordée la capacité C6 de 1 nF, elle-même raccordée à l'entrée -Vcc du circuit.

L'oscillateur constitué par les composants R5, C6, 43 et 44 est basé sur la réaction de l'entrée sur la sortie au travers de la résistance qui charge la capacité C6. Lorsque l'entrée de l'oscillateur, située au point de raccord de la capacité C6 avec la résistance R5, est à zéro, alors la sortie est à un, ce gui charge ladite entrée. Or le circuit R5-C6 introduit un retard et grâce à l'hystérésis de l'entrée, cette dernière bascule à un, lorsque le point de raccord entre la résistance R5 et la capacité C6 a atteint la tension d'hystérésis. Une oscillation est ainsi générée en sortie du second amplificateur inverseur 44. C'est le signal T2 de fréquence 25 kHz, générant une impulsion de 20 µs toutes les 40 µs.

Ce signal T2 est appliqué à l'entrée CK d'un diviseur de fréquence 47, constitué en l'espèce par un composant de type HCF 4510. Ce diviseur de fréquence réalise une division par 10. La sortie T̅C̅ du diviseur de fréquence est, dans ce mode de réalisation, raccordée à l'entrée d'un amplificateur de Schmidt 48 de type HCF 40106B. L'ensemble des composants 47, 48 réalise ici le diviseur de fréquence 42 illustré en figure 4.

Ce diviseur de fréquence réalise un comptage des impulsions du signal T2 et ne génère une impulsion T3 que toutes les dix impulsions comptées. Il est réinitialisé à chaque passage à zéro grâce au signal T1.

Le signal T3 est envoyé sur une entrée de la porte ET 31 et sur une entrée CP d'un circuit 50 de contrôle de validation-dévalidation de la commande du triac 21.

La sortie de la porte OU EXCLUSIF 40 (signal T1) est raccordée à une entrée S du circuit 50 de contrôle de validation-dévalidation.

Le circuit 50 de contrôle de validation-dévalidation est un circuit qui, à partir des signaux T1 et T3 définit trois intervalles de temps pour chaque demi-alternance du réseau, figure 7 :
- à chaque passage à zéro de la tension du réseau, le circuit 50 est réinitialisé ;
- il définit et matérialise l'intervalle de temps δt₁ après le passage à zéro de la tension pendant lequel il interdit la commande du triac 21 (dans ce mode de réalisation, δt₁ = 1,6 ms) ;
- il définit ensuite et matérialise le second intervalle de temps δt₂ pendant lequel il autorise la commande du triac (dans ce mode de réalisation, δt₂ = 3,4 ms) ;
- enfin, il interdit la commande du triac jusqu'au prochain passage à zéro de la tension (δt₃). Dans le mode de réalisation présentement décrit, δt₃ vaut 3,33 ms dans le cas d'une fréquence réseau de 60 Hz et 5 ms dans le cas d'une fréquence réseau de 50 Hz.

La figure 8 illustre un mode de réalisation préféré du circuit 50. Ce circuit comporte essentiellement une bascule D d'entrée 51 dont une sortie Q̅ est reliée à une entrée MR d'un compteur sept étapes 52 dont les sorties 5, 6 et 11 sont reliées à deux portes ET 53, 54, la sortie 5 du compteur 52 étant reliée à l'une des entrées de la porte ET par l'intermédiaire d'un amplificateur inverseur 55. La sortie de la porte ET 53 est raccordée à une entrée R d'une bascule D de sortie 56, tandis que la sortie de la porte ET 54 est raccordée à l'entrée CK de la bascule 56. Les sorties 4 et 9 du compteur 52 sont reliées, par l'intermédiaire d'une porte ET 57 à une entrée R de remise à zéro de la bascule d'entrée 51.

Le signal T1 est appliqué à l'entrée CK de la bascule d'entrée 51, tandis que le signal T3 est appliqué à l'entrée CK du compteur 52. Le signal sur la sortie Q de la bascule de sortie 56 est un signal T4 appliqué sur la porte ET 31 de l'étage de synthèse.

Dans ce mode de réalisation, les deux bascules D 51 et 56 sont des composants HCF 4013, tandis que le compteur sept étapes est un composant HCF 4024. Les portes ET 53, 54 et 57 sont des composants HCF 4073. L'amplificateur inverseur 55 est un composant HCF 40106B.

Le fonctionnement du circuit 50 va maintenant être expliqué à l'appui de la figure 9 qui est un diagramme illustrant divers signaux.

La bascule d'entrée 56 permet de mettre en forme et d'immuniser le signal T1 contre les parasites éventuellement présents dans la tension alternative d'alimentation. Cette bascule est armée par le front montant de l'impulsion T1. Le signal T6 sur sa sortie Q, bascule alors à zéro. La bascule d'entrée 51 est désarmée au bout de 7 ms par un signal appliqué à son entrée de remise à zéro R.

Ce dernier signal est réalisé par le compteur 52. En effet, ce compteur est agencé pour compter notamment trente cinq fois le premier front de l'impulsion du signal T3. Il est rappelé ici que sa période est de 200 µs. Aussi, à chaque fois que le compteur 7 compte trente cinq fois le front montant de l'impulsion T3, un signal est généré, par l'intermédiaire de la porte ET 57 sur l'entrée R de la bascule d'entrée 51, de telle sorte que celle-ci est remise à zéro.

Le compteur 52 permet aussi d'élaborer l'instant minimum de validation de la commande du triac. Dans ce mode de réalisation, l'instant t₁ (figure 5) est fixé à 1,6 ms compte tenu notamment de la période de 200 µs du signal T3 servant de base au comptage. Pour élaborer en sortie de la porte 54 le signal T8 permettant de déterminer l'instant minimum de la validation de la commande du triac, le compteur 52 compte huit fois le premier front de l'impulsion T3.

Le compteur 52 a également pour fonction d'élaborer l'instant maximum t₂ de dévalidation de la commande de triac (qui dans ce mode de réalisation se situe à 5 ms après le passage à zéro de la tension d'alimentation). Dans ce but, le compteur 52 compte vingt cinq fois le premier front du signal T3 et élabore ainsi un signal T7 en sortie de la porte 53.

Le front descendant des signaux T7 et T8 est déterminé par le front montant du signal T6 appliqué sur l'entrée MR du compteur 52 lui-même élaboré lors de la remise à zéro de la bascule d'entrée 51, au bout de 7 ms après le passage par zéro de la tension d'alimentation.

La bascule D de sortie 56 permet d'élaborer l'intervalle de temps de la commande de la gâchette 22 du triac 21 à partir des signaux T7 et T8 : le front montant du signal T7 arme la bascule de sortie à 1, et le front montant du signal T8 la désarme. On obtient ainsi un signal T4 qui matérialise cet intervalle de temps après le passage à zéro de la tension d'alimentation (T4 est à 1 pendant l'intervalle de temps compris entre 1, 6 ms après le passage à zéro de la tension d'alimentation et 5 ms après ce passage à zéro).

Le signal T4 est appliqué à l'étage de synthèse constitué par la porte ET 31. Des impulsions sont envoyées sur la gâchette du triac (signal T5) lorsque les trois entrées de la porte ET 31 sont égales à un :
- l'entrée a est mise à un avec un retard de huit périodes après que la plage de tension centrée sur 110 V a été détectée par le comparateur 33, comme expliqué plus haut. Cette entrée reste à un tant que la plage de tension centrée sur 110 V est détectée ;
- un signal un est appliqué à l'entrée b de la porte ET 31 lorsque le signal T4 est égal à 1 ;
- un signal un est appliqué sur l'entrée c de la porte ET 31 à chaque fois que le signal T3 prend la valeur un.

Ainsi, tant que la plage de tension centrée sur 110 V est détectée, un train d'impulsions de fréquence 25 kHz est envoyé sur la grille du transistor 30 pendant l'intervalle de temps δt₂ (figures 7 et 9). Un train d'impulsions de même nature se trouve par conséquent envoyé sur la gâchette du triac 21 raccordé au drain du transistor 30.

Dans l'exemple qui vient d'être décrit, l'inventeur a constaté une économie de puissance consommée par le circuit 20 supérieure à 50 % par rapport à celle observée dans l'art antérieur rappelé plus haut.

Bien entendu, la présente invention ne se limite nullement au mode de réalisation choisi et représenté mais englobe toutes variantes à la portée de l'homme de l'art. Ce dernier pourra bien évidemment employer d'autres composants pour rendre conducteur le triac seulement pendant l'intervalle de temps δt₂.

De même, cet intervalle de temps pourra être choisi pour permettre la mise en oeuvre d'un redresseur conforme à l'invention susceptible de fonctionner avec d'autres plages de tension d'alimentation que celles qui ont été choisies ici à titre d'exemple.

## Revendications

1. Redresseur susceptible de fonctionner avec deux plages distinctes de tension alternative d'alimentation, comportant un pont de diodes (D1-D4) dont une entrée (11,12) est raccordée à une source de tension alternative d'alimentation, deux capacités d'alimentation (C1,C2) montées en série et raccordées en parallèle sur une sortie (13,14) du pont de diodes, un interrupteur commandé (S) raccordé entre l'une (11) des bornes d'entrée du pont de diodes et un point de raccord (15) agencé en série entre les deux capacités, un détecteur de plage de tension d'alimentation et un moyen de commande de l'interrupteur agissant notamment en réponse au détecteur et adapté à commander la fermeture de l'interrupteur lorsque la tension d'alimentation est comprise dans l'une, prédéterminée, desdites plages d'alimentation, redresseur caractérisé en ce que le moyen de commande (20) est en outre adapté à fermer l'interrupteur (S) après un premier intervalle de temps (δt₁) après passage à zéro de la tension d'alimentation et à l'ouvrir après un second intervalle de temps (δt₂), l'échéance du second intervalle de temps correspondant sensiblement au moment où la valeur absolue de la tension doit passer par un maximum.

2. Redresseur selon la revendication 1, caractérisé en ce que l'échéance du second intervalle de temps est également déterminée en fonction de la fréquence nominale la plus faible de celles caractérisant lesdites plages de tension alternatives d'alimentation.

3. Redresseur selon l'une quelconque des revendications 1, 2, caractérisé en ce que l'interrupteur commandé est au moins en partie constitué par un triac (21) tandis que le moyen de commande comporte des moyens (32,57) raccordés à la gâchette (22) du triac (21) adaptés à rendre le triac conducteur, après le premier intervalle de temps (δt₁) après chaque passage à zéro de la tension d'alimentation et à bloquer le triac (21) après le second intervalle de temps (δt₂).

4. Redresseur selon la revendication 3, caractérisé en ce que lesdits moyens (36,57) sont adaptés à fournir à la gâchette du triac un train d'impulsions de commande pendant le second intervalle de temps.

## Patentansprüche

1. Gleichrichter, welcher mit zwei getrennten Bereichen von Versorgungs-Wechselspannungen arbeiten kann, mit einer Diodenbrücke (D1 - D4), deren einer Eingang (11, 12) mit einer Versorgungs-Wechselspannung verbunden ist, zwei Speicherkondensatoren (C1, C2), welche in Reihe geschaltet sind und parallel zu einem Ausgang (13, 14) der Diodenbrücke liegen, einem gesteuerten Schalter (S), welcher zwischen einem Eingangsanschluß (11) der Diodenbrücke und einem Serienverbindungspunkt (15) zwischen den beiden Kondensatoren angeschlossen ist, einem Versorgungsspannungsbereichs-Detektor und einer Schalter-Steuervorrichtung, welche auf den Detektor anspricht und das Schließen des Schalters steuern kann, wenn die Versorgungsspannung innerhalb eines Vorgegebenen der Versorgungsspannungsbereiche liegt, dadurch gekennzeichnet, daß die Steuervorrichtung (20) darüber hinaus den Schalter (S) nach einem ersten Zeitintervall (δt₁) nach einem Nulldurchgang der Versorgungsspannung schließen kann und nach einem zweiten Zeitintervall (δt₂) öffnen kann, wobei das Ende des zweiten Zeitintervalls im wesentlichen dem Zeitpunkt entspricht, bei dem der Absolutwert der Spannung ein Maximum durchläuft.

2. Gleichrichter nach Anspruch 1, dadurch gekennzeichnet, daß das Ende des zweiten Zeitintervalls auch als eine Funktion der niedrigsten Nennfrequenz unter den Frequenzen bestimmt wird, welche die Bereiche der Versorgungs-Wechselspannungen kennzeichnen.

3. Gleichrichter nach Anspruch 1 oder 2, dadurch gekennzeichnet, daß der gesteuerte Schalter mindestens zu einem Teil aus einem Triac (21) besteht, wobei die Steuervorrichtung eine Vorrichtung (32, 57) umfaßt, welche mit dem Gate (22) des Triacs (21) verbunden ist und den Triac nach dem ersten Zeitintervall (δt₁) nach jedem Nulldurchgang der Versorgungsspannung einschalten und nach dem zweiten Zeitintervall (δt₂) sperren kann.

4. Gleichrichter nach Anspruch 3, dadurch gekennzeichnet, daß die Vorrichtung (36, 57) während des zweiten Zeitintervalls eine Steuerimpulsfolge an das Gate des Triacs anlegen kann.

## Claims

1. A rectifier adapted to operate with at least two separate ranges of AC line voltage comprising a diode bridge (D1-D4) having one input (11, 12) adapted to be connected to an AC line voltage, two reservoir capacitors (C1, C2) connected in series with each other and shunting an output (13, 14) of said diode bridge, a controlled switch (S) connected between one input terminal (11) of said bridge and a series connection point between said two capacitors, an AC line voltage range detector and switch control means responsive to said detector and adapted to cause said switch to be closed when said AC line voltage is in a predetermined one of said AC line voltage ranges, said rectifier being characterized in that said control means (20) are further adapted to close said switch (S) after a first time interval (δt₁) after a zero crossing of said AC line voltage and to open said switch after a second time interval (δt₂), the end of the second time interval substantially corresponding to the time at which the absolute value of the voltage reaches a maximum.

2. A rectifier according to claim 1, characterized in that the end of the second time interval is also determined as a function of the lowest frequency among the frequencies characterizing said AC line voltage ranges.

3. A rectifier according to claim 1 or 2, characterized in that at least part of said switch is a triac (21) and said control means comprise triac control means (32, 57) connected to the gate (22) of said triac (21) adapted to turn on said triac after said first time interval (δt₁) after each zero crossing of said AC line voltage and to turn off said triac (21) after said second time interval (δt₂).

4. A rectifier according to claim 3, characterized in that said triac control means (36, 57) are adapted to apply to said triac gate a stream of control pulses during said second time interval.
